# EUROPEAN PATENT APPLICATION

(11) **EP 2 018 011 A1**
(43) Date of publication of application: **21.01.2009**
(21) Application number: 07785254.9
(22) Date of filing: 03.08.2007
(51) Int. Cl.: H04L 12/66, H04L 12/26

(54) **METHOD, SYSTEM AND DEVICE FOR COMMUNICATING SEAT INFORMATION UNDER SEPARATE FRAMEWORK**

(30) Priority: 04.08.2006 CN 200610109541
(71) Applicant: Huawei Technologies Co., Ltd., Longgang District, Shenzhen Guangdong 518129 (CN)
(72) Inventor: FENG, Jiangping, Shenzhen, Guangdong 518129 (CN)
(74) Representative: Löfgren, Bengt Håkan Alpo
(86) International application number: PCT/CN2007/002340
(87) International publication number: WO 2008/017250

(57) **Abstract**

A method and system for exchanging floor information in a decomposed architecture are published to solve the problem that a Media Processor can not acquire information relevant to a floor and further can not process the control of conference floor in the present architecture that a Media Controller and the Media Processor are located separately. The method of present invention includes: a Media Controller acquires information relevant to a floor; and the Media Controller sends the information relevant to a floor to a Media Processor. The system of present invention includes: a Media Controller, configured to acquire and send information relevant to a floor; and a Media Processor, configured to receive and save the information relevant to a floor sent by the Media Controller. According to the implementing of the present invention, the Media Processor can acquire information relevant to a floor, and process the control of conference floor basing on the information relevant to a floor in the architecture that the Media Controller and the Media Processor are located separately.

## Description

### Field of the Invention

The present invention relates to a network and communication technique, and in particular to a method, system and apparatus for exchanging floor information in a decomposed architecture,

### Background of the Invention

Generally speaking, there are some shared resources in conference service. For example, the right to speak, the right to send through the limited bandwidth video channel, and the right to write on the whiteboard, etc. Floor points to a permission for visiting or controlling these shared resources. Floor control provides a mechanism to manage the shared resources.

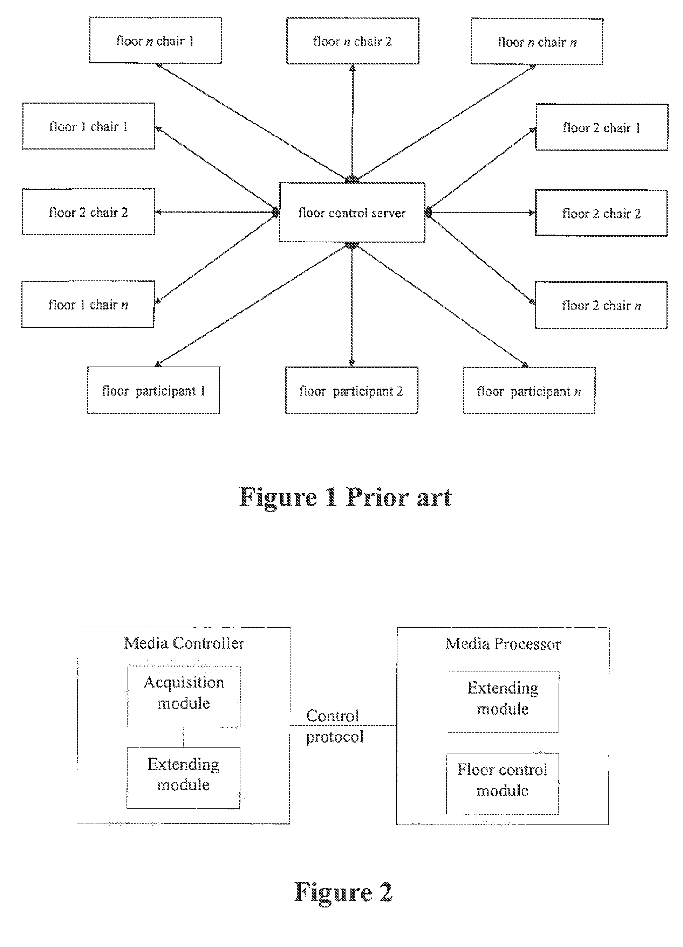

With reference to Figure 1, there are following several kinds of roles in floor control.

Floor control server, a logical entity to maintain a floor's status. These statuses include how many floors exist, how many people have the floor, and who is the chair of the floor, etc.

Floor participant, a logical entity to request a floor to the floor control server.

Floor chair, a logical entity to manage a floor. It may grant, deny or revoke a floor.

A conference can have one or multiple floor(s). Each floor can have one or multiple chair(s). For example, in a conference there may be three floors which respectively correspond to the inputting rights of speech, video and electronic whiteboard. Of course, one floor can be set which corresponds to the inputting right of all media.

There may be no floor chair for a floor. The floor control server decides to grant, deny or revoke a floor. Whether a floor chair exists is decided by the floor policy. The floor policy includes whether a conference use floor control or not, how many floor, the algorithm used by each floor, who is the chair of each floor, the media types controlled by each floor, and the maximum holder number of each floor, etc. Floor control policy was defined in the Conference Policy Control Protocol (draft-ietf-xcon-cpcp-xcap-00).

The procedures of floor control include following steps:

1. A floor participant sends a floor request to a floor control server.

2. The floor control server examine whether the content of the request message is legal. If it is illegal the floor control server sends a response message to the floor participant to indicate error.

3. The floor Control server examine whether the holder number of the present floor reaches the maximum value. If it reached, the floor control server sends a response message to the floor participant to indicate error.

4. The floor request is transmit to a floor chair by the floor control server.

5. The floor chair decides whether grants or denies the request, and sends a result to the floor control server.

6. The result is transmitted to the floor participant by the floor control server.

7. The floor control server sends a status changing notifying message to floor participants and the floor chair.

The exchange process and the content of the messages among the floor participant, the floor control server and the floor chair are defined in some protocol of Internet Engineering Task Force (IETF), e.g. the Binary Floor Control Protocol (BFCP).

Floor control has been broadly used in a composed architecture that a Media Controller and a Media Processor are located in one entity. It also has been used in a decomposed architecture that a Media Controller and a Media Processor are located separately.

At present, in the decomposed architecture the Media Controller is in charge of the control of a call, it also indicates the Media Processor to operate the media resources. The Media Processor provides the media resources, and operates the media resource according to the indication of the Media Controller. Exchange between the Media Controller and the Media Processor is done through some control protocol, e.g. H.248 protocol. The Media Controller includes but is not limited as a Media Gateway Controller (MGC), a Mobile Switching Center-SERVER (MSC-SERVER) and a Multimedia Resource function Controller (MRFC), etc. The Media Processor completes the function of the floor control server, and it includes but is not limited as a Media Gateway (MGW) and a Multimedia Resource function processor (MRFP), etc.

The H.248 protocol specialized in controlling media resource is defined by the International Telecommunications Union-Telecommunication Standardization Sector (ITU-T) Study Group (SG) 16. The basic principle is that various resources on a Media Processor are abstracted as terminations divided into physical terminations and temporary terminations. The physical termination represents a physical entity that semi-persistent exists, such as a TDM timeslot. The temporary termination represents a common resource that would be released after a use as requested temporarily, such as an RTP stream. Combinations of terminations are abstracted as context, and the relationship between terminations is described with a topology, Based on such abstractions, a call connection is actually an operation on the terminations and the context, which is accomplished via command requests and responses between a Media Controller and a Media Processor. The commands include Addition, Modification, Deletion, Notification, etc. The command parameters, referred to as descriptors, are divided into Property, Signal, Event and Statistic. Service-related parameters are logically aggregated into a package which is an approach provided from the H.248 protocol for extension of protocol functions.

The H.248 protocol has many extended protocols, H.248, 19 protocol which defines packages related to a conference also is an extended protocol. The Floor Control Package is one of the packages. It defines which termination represents a floor chair in a context. A Media Controller can indicate whether a termination in a Media Processor represents a floor chair according to this package. The Floor Control Package is showed as following.

10.1 Floor Control Package

Package Name: Floor Control Package

Package ID: fcp, 0x006e

Description: This package defines a property to indicate that the termination represents the user who is the conference floor controller.

Version: 1

Designed to be extended only: No

Extends: None

10.1.1 Properties

10.1.1.1 Property Name: Activate Floor Controller

PropertyID: afc, 0x0001

Description: This property indicates whether or not the termination represents the floor controller or not.

Type: Boolean

Possible values: "on" (0x0001) Floor Controller Handling

"off" (0x0000) No Floor Control Handling [Default]

Defined in: Termination Status Descriptor

Characteristics: Read/Write

10.1.2 Events

None.

10.1.3 Signals

None.

10.1.4 Statistics

None.

10.1.5 Procedures

The MC may set this property on a media gateway to indicate that the termination relates to the floor controller. The "Activate Floor Control" property may be used by the media processor to mix user plane data for the conference.

10.1.6 Error code

None.

In the process of the research and development of the present invention, the inventor discovers that at present how to exchange between the Media Controller and the Media Processor and the content of the exchange massage is not completed in the decomposed architecture that a Media Controller and a Media Processor are located separately,

### Summary of the Invention

Embodiments of the invention provide a method, system and apparatus for exchanging floor information in a decomposed architecture to let a Media Processor can get information relevant to a floor in the architecture that a Media Controller and the Media Processor are located separately.

The method of the embodiments of the invention includes acquiring, by a Media Controller, information relevant to a floor, and sending, by the Media Controller, the information relevant to a floor to a Media Processor.

The system of the embodiments of the invention includes a Media Controller, configured to acquire and send information relevant to a floor; and a Media Processor, configured to receive and save the information relevant to a floor sent by the Media Controller.

The Media Controller of the embodiments of the invention includes a acquisition module, configured to acquire the information relevant to a floor; and an extending module, configured to send the information relevant to a floor acquired by the acquisition module via an extend protocol package,

The Media Processor of the embodiments of the invention includes an extending module, configured to report the current status information of a floor via an extended protocol package; analyze a received protocol package, and acquire information relevant to a floor from the received protocol package; and a storage module is configured to save the extending module acquired by the extending module.

In the embodiments of the present invention, after acquiring information relevant to a floor, the Media Controller sends the information relevant to a floor to the Media Processor via an extended protocol package, so the Media Processor can acquire the information relevant to a floor.

### Brief Description of the Drawings

Figure 1 illustrates a network of floor control according to prior art;

Figure 2 illustrates a system structure according to an embodiment of the invention;

Figure 3 illustrates a structure of a Media Controller according to an embodiment of the invention;

Figure 4 illustrates a structure of a Media Processor according to an embodiment of the invention;

Figure 5 is a flow chart of method steps according to an embodiment of the invention;

Figure 6 is a flow chart of the first embodiment of the invention;

Figure 7 is a flow chart of the second embodiment of the invention;

Figure 8 is a flow chart of the third embodiment of the invention; and

Figure 9 is an implement flow chart of an embodiment of the invention,

### Detailed Description of the Invention

Embodiments of the invention provide a system for transmitting floor information in a decomposed architecture to let a Media Processor can acquire information relevant to a floor and further process the control of the conference floor(s) in the architecture that a Media Controller and the Media Processor are located separately. As shown in Figure 2, the system includes a Media Controller and a Media Processor. The Media Controller connects with the Media Processor via a control protocol, e.g. H.248 control protocol.

The Media Controller is configured to acquire and send information relevant to a floor.

The Media Processor is configured to receive and save the information relevant to a floor sent by the Media Controller, and process the control of the conference floor(s) according to the saved information relevant to a floor.

Further more, the Media Controller includes an acquisition module and an extending module connecting with the acquisition module.

The acquisition module is configured to acquire the information relevant to a floor.

The extending module in the Media Controller is configured to extend protocol package, carry the information relevant to a floor acquired by the acquisition module into the extended protocol package, send it to the Media Processor, and analyze a protocol package sent from the Media Processor.

The Media Processor includes an extending module and a floor control module.

The extending module in the Media Processor is configured to carry the current status information of the floor into a protocol package sent to the Media Controller when the Media Controller indicated the Media Processor to report the status change information of a floor and the status of the floor changed, and analyze a protocol package sent by the Media Controller.

The floor control module is configured to process the control of conference floor(s) according to the saved information relevant to a floor.

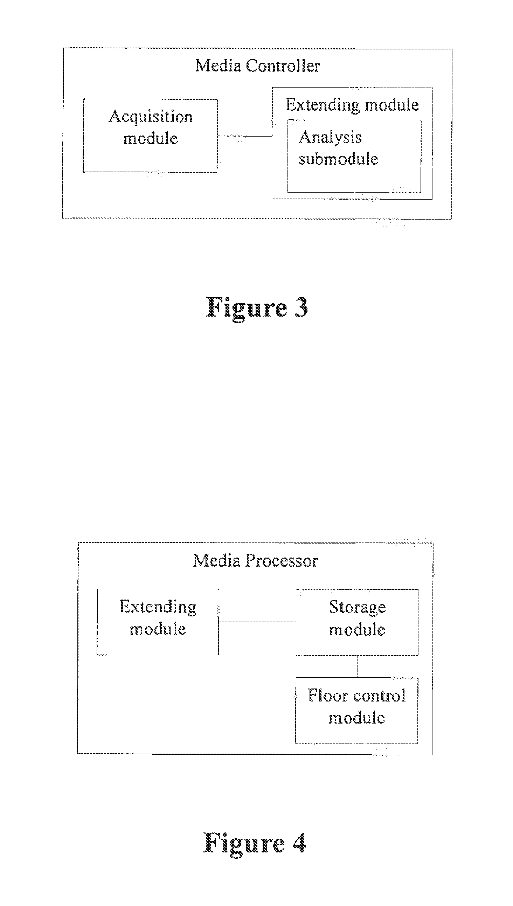

As shown in Figure 3, an embodiment of the invention provides a Media Controller which includes an acquisition module and an extending module. The extending module further includes a analysis submodule.

The acquisition module is configured to acquire information relevant to a floor.

The extending module is configured to send the information relevant to a floor acquired by the acquisition module via an extend protocol package. The analysis submodule in the extending module is configured to analyze a received protocol package.

As shown in Figure 4, an embodiment of the invention provides a Media Processor which includes an extending module and a storage module. The Media Processor further includes a floor control module.

The extending module is configured to report the current status information of a floor via an extended protocol package; analyze a received protocol package, and acquire information relevant to a floor from the received protocol package.

The storage module is configured to save the extending module acquired by the extending module.

The floor control module is configured to process the control of conference floor(s) according to the information relevant to a floor saved by the storage module.

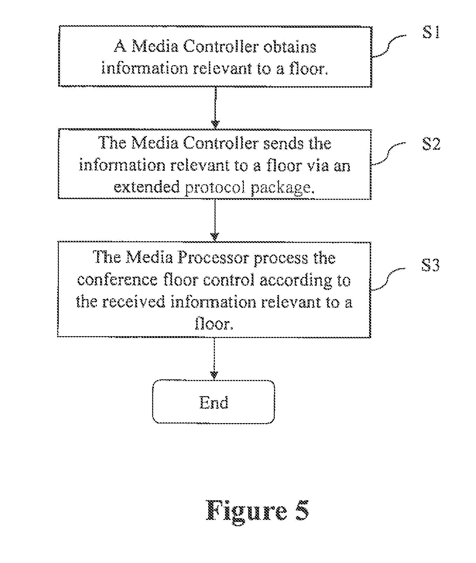

As shown in Figure 5, an embodiment of the invention provides a method for implementing conference floor control in a decomposed architecture. The method includes:

S1. A Media Controller acquires information relevant to a floor.

When conference administrator creates or modifies the information relevant to a floor, the Media Controller acquires the information relevant to a floor from other device, e.g. conference policy server.

S2. The Media Controller sends the information relevant to a floor via an extended protocol package.

In this step, the information relevant to a floor at least includes one of the following floor policies: whether the floor control is in use or not, the ID of each floor, the algorithm used by each floor, who is the chair of each floor, the media type relevant to each floor, and the maximum holder number of each floor. The algorithm used by each floor includes but is not limited as chair-controlled algorithm, first come first served algorithm, and random algorithm. The media type controlled by each floor includes but is not limited as video, audio, application, data, control, message and text.

Further more, in order to let the Media Processor can acquire which floors are controlled by the chair in the architecture that the Media Controller and the Media Processor are located separately, when indicating the floor chair to the Media Processor, the Media Controller adds a property into the floor control package that is sent to the Media Processor to indicate the floor(s) controlled by the chair.

Further more, in order to let the Media Processor can acquire which media streams are controlled by the chair in the architecture that the Media Controller and the Media Processor are located separately, when indicating the floor chair to the Media Processor, the Media Controller adds a property into the floor control package that is sent to the Media Processor to indicate the media stream(s) controlled by the floor chair.

Further more, in order to let the Media Controller can acquire status change information of a floor participant in the architecture that the Media Controller and the Media Processor are located separately, the Media Controller adds an event property into the floor control package that is sent to the Media Processor to indicate the Media Processor whether need to report floor status change information or not. If the Media Controller indicates the Media Processor needs to report the floor status change information, the Media Processor add an event property into the floor control package that is reported to the Media Controller, to carry current status of the floor when the floor holding status of the floor participant changed, i.e. just acquiring the floor or just releasing the floor. The content of the reported floor control package includes: status of the floor participant, and the floor ID or the media stream(s) relevant to the floor. The floor status includes: Granted, Revoked, or Released, etc.

S3, The Media Processor process the conference floor control according to the received information relevant to a floor.

The Media Processor process the conference floor control according to the received information relevant to a floor. For example, transmit a floor request to a chair according to the information of the floor chair, and let the chair to process a grant.

In the same time, the Media Processor can process the operation of a media stream including: modifying the direction of the media stream, and/or controlling whether mix the media stream with other participants' media stream in a conference or not, or other action. According to whether the Media Controller indicates the Media Processor to report the floor status change information in step S2, the control mode include following three types:

Control mode 1: the Media Controller indicates the Media Processor to report the floor status change information, When a floor request is accepted (floor status is changed), the Media Processor directly operates the media stream of the participant of the floor by itself, and reports the floor status change information to the Media Controller.

Control mode 2: the Media Controller indicates the Media Processor to report the floor status change information. When a floor request is accepted (floor status is changed), the Media Processor reports the floor status change information to the Media Controller. According to the reported floor status change information, the Media Controller correspondingly sends a media stream control indication to let the Media Processor to operate the media stream of the participant of the floor according to the media stream control indication.

Control mode 3: the Media Controller doesn't indicate the Media Processor to report the floor status change information. The Media Processor directly operates the media stream of the participant of the floor by itself.

Corresponding to the three types of media stream control mode in the step S3, three embodiments are described separately.

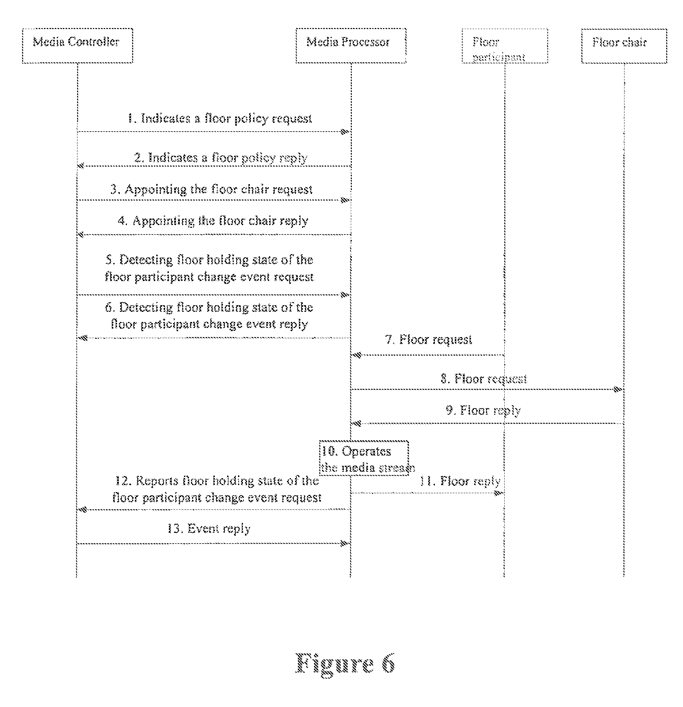

The first method embodiment a Media Controller indicates a Media Processor to report the floor status change information. The Media Processor directly operates the media stream(s). As shown in Figure 6, the embodiment include following steps:

1. The Media Controller sends a floor control policy to the Media Processor via an extended floor control policy package.

2. The Media Processor acknowledges the receipt.

3. The Media Controller sends a request of appointing the floor chair to the Media Processor. The request may appoint the floor(s) controlled by the chair, and/or the media stream(s) controlled by the floor chair simultaneously

4. The Media Processor acknowledges the receipt.

5. The Media Controller adds an event property into the floor control package sending to the Media Processor, to indicate the Media Processor needs to report the floor status change information,

6. The Media Processor acknowledges the receipt.

7. The floor participant sends a floor request including acquiring floor request and releasing floor request to the Media Processor.

8. The Media Processor transfers the floor request to the corresponding floor chair.

9. The floor chair acknowledges the receipt.

10. The Media Processor directly operates the media stream of the participant of the floor. When the acquiring floor request initiated by the floor participant is accepted, the Media Processor will receive the media stream from the floor participant and mix the media stream into the conference. When the releasing floor request initiated by the floor participant is accepted, the Media Processor will refuse to receive the media stream from the floor participant.

11. After operating the media stream, the Media Processor acknowledges the floor participant.

12. The Media Processor reports the event to the Media Controller to indicate the floor holding status of the floor participant changed,

13. The Media Controller acknowledges the receipt

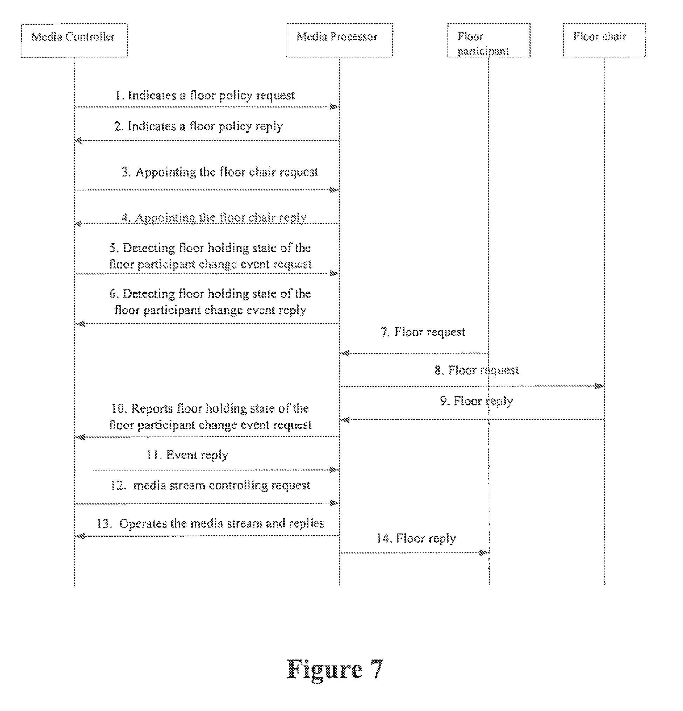

The second method embodiment: a Media Controller indicates a Media Processor to report the floor status change information. The Media Processor communicates with the Media Controller, and operates the media stream(s) according to the media stream controlling instruction sending from the Media Controller. With reference to Figure 7, the embodiment include following steps:

1. The Media Controller sends a floor control policy to the Media Processor via an extended floor control policy package.

2. The Media Processor acknowledges the receipt.

3. The Media Controller sends a request of appointing the floor chair to the Media Processor. The request may appoint the floor(s) controlled by the chair, and/or the media stream(s) controlled by the floor chair simultaneously.

4. The Media Processor acknowledges the receipt.

5. The Media Controller adds an event property into the floor control package sending to the Media Processor, to indicate the Media Processor needs to report the floor status change information.

6. The Media Processor acknowledges the receipt.

7. The floor participant sends a floor request including acquiring floor request and releasing floor request to the Media Processor.

8. The Media Processor transfers the floor request to the corresponding floor chair.

9. The floor chair acknowledges the receipt.

10. The Media Processor reports the event to the Media Controller to indicate the floor holding status of the floor participant will change.

11. The Media Controller acknowledges the receipt.

12. The Media Controller sends a media stream controlling request corresponding to the reported floor status change information.

13. The Media Processor operates the media stream of the participant of the floor according to the media stream controlling request. When the acquiring floor request initialed by the floor participant is accepted, the Media Processor will receive the media stream from the floor participant and mix the media stream into the conference. When the releasing floor request initiated by the floor participant is accepted, the Media Processor will refuse to receive the media stream from the floor participant. After operating, the Media Processor returns an acknowledgment for the media stream controlling request.

14. The Media Processor acknowledges the floor participant.

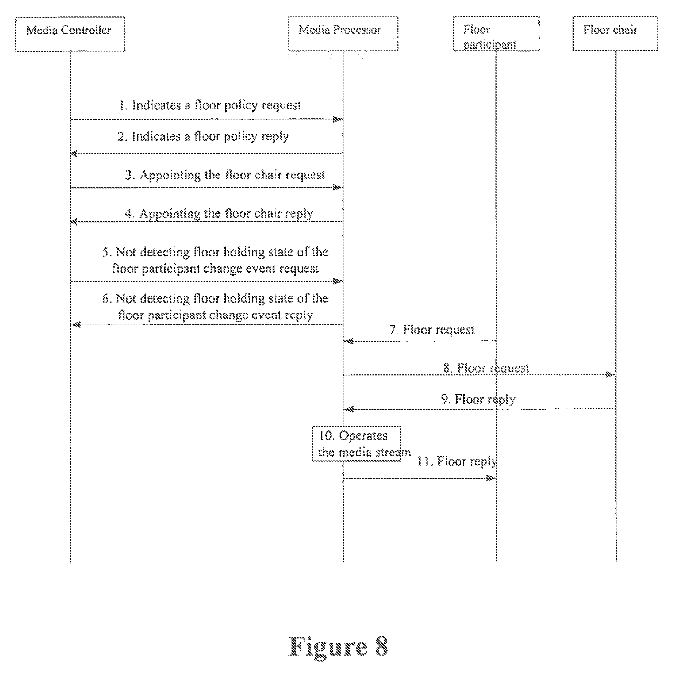

The third method embodiment: a Media Controller does not indicate a Media Processor to report the floor status change information. The Media Processor directly operates the media stream(s). With reference to Figure 8, the embodiment include following steps;

1. The Media Controller sends a floor control policy to the Media Processor via an extended floor control policy package.

2. The Media Processor acknowledges the receipt.

3. The Media Controller sends a request of appointing the floor chair to the Media Processor. The request may appoint the floor(s) controlled by the chair, and/or the media stream(s) controlled by the floor chair simultaneously.

4. The Media Processor acknowledges the receipt.

5. The Media Controller adds an event property into the floor control package sending to the Media Processor, to indicate the Media Processor does not need to report the floor status change information.

6. The Media Processor acknowledges the receipt.

It is noted that this embodiment may not include the step 5 and 6, i,e, it is a default that the Media Processor does not need to report the floor status change information if the Media Controller does not send the relevant protocol package indicating to report the floor status change information.

7. The floor participant sends a floor request including acquiring floor request and releasing floor request to the Media Processor.

8. The Media Processor transfers the floor request to the corresponding floor chair.

9. The floor chair acknowledges the receipt.

10. The Media Processor directly operates the media stream of the participant of the floor. When the acquiring floor request initialed by the floor participant is accepted, the Media Processor will receive the media stream from the floor participant and mix the media stream into the conference. When the releasing floor request initialed by the floor participant is accepted, the Media Processor will refuse to receive the media stream from the floor participant.

11. After operating the media stream, the Media Processor acknowledges the floor participant.

There is a description about a implementing of the second method embodiment basing on the following H.248 control protocol.

1) Defines a floor control policy package:

Package ID: fepoli

It includes following properties:

Property Name: Enable floor control

Property ID: efc

Description: indicates whether the floor control is to be used or not.

Type: Boolean

Possible values: "on" (0x0001) Enable the function of floor control

"off" (0x0000) Disable the function of floor control

Default: off

Defined in: LocalControl descriptor

Characteristics: Read/Write

Property Name: floor control algorithm

Property ID; fca

Description: indicates the floor control algorithm to be used.

Type: Enum

Possible values: 1: chair-controlled algorithm

2: FCFS (first corne first served) algorithm

3: random algorithm

Default: FCFS (2)

Defined in: LocalControl descriptor

Characteristics: Read/Write

Property Name: Maximum holder number of each floor

Property ID:mfhn

Description: indicates the maximum number of users who can hold the floor at the same time.

Type: Ingeger

Possible values: 0-65535

Default: 1

Defined in: LocalControl descriptor

Characteristics: Read/Write

The procedures are when the privileged user creates or modifies the floor policy, the Media Controller will receive the policy. The Media Controller shall send the policy to the Media Processor, and the Media Processor shall save the policy for the following floor control.

If floor control is needed on a media stream, the Media Controller should set the property *efc* to "on"; otherwise set the property *efc* to "off".

If the *fca* property is set to "chair-controlled algorithm", the Media Controller should appoint the floor chair via the floor control package; otherwise, the Media Processor processes the floor granting by itself.

If the holder number of a floor in the same time exceeds the value of the *mfhn* property, the Media Processor may queue or reject the floor grant requests.

2) Add a property into the floor control package *fcp* of the present H.248.19 protocol, to indicate which floor and/or media stream is controlled by the appointed chair.

Parameter Name: whether is controlled by the chair or not.

Property ID: cbc

Description: indicates whether the stream is controlled by the chair or not

Type: Boolean

Possible values: on, controlled by the chair

off, not controlled by the chair

Default; off

Defined in: LocalControl Descriptor

Characteristics: Read/Write

The procedures are the Media Controller may indicate the Media Processor which media stream(s) is controlled by the floor chair via the property *cbc*. If this property is set to "on", the media floor request associated with this stream will be forwarded to the user that this termination represents.

3) Defines a floor status detection package fsdp, used to report the floor status changes.

Event Name: floor status

Event ID: fsd

Description: is used to report that the termination acquires the floor or releases the floor.

Event Descriptor Parameters: None

Observed Events Descriptor Parameters:

- Floor status:
- Parameter ID: fs
- Description: indicates the status of a floor
- Type: Integer
- Possible Values:
   o "Granted'" (1): already being granted a floor
   o "Revoked" (2): already being revoked a floor
   o "Released" (3): already being released a flour

Floor ID:
- Parameter ID: sid
- Description:: indicates a list of the stream IDs that associate with the changed floor
- Type: Sub-List of Integer
- Possible Values: 1-65535

The procedures are the Media Controller may indicate the Media Processor to report this event when the floor status of an appointed participant changed. After receiving the event, the Media Controller may indicate the Media Processor to modify the stream mode, or for other usage, e.g. for charging.

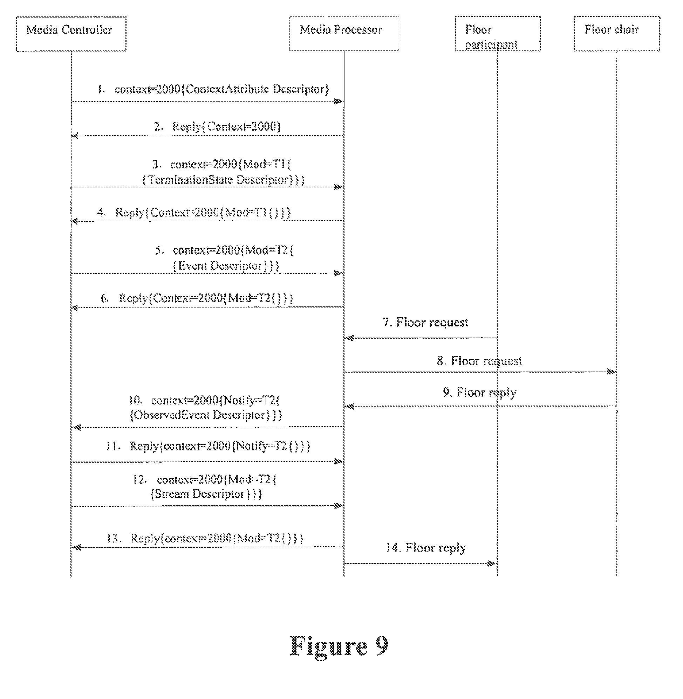

4) As shown in figure 9, it is an example of the H.248 procedure.

This example assumes that the conference context ID is 2000; the conference has a floor; the media stream relevant to the floor is audio; the media stream ID is 1; and the H.248 termination ID corresponding to the floor chair is T1 with a value of A4444. The H.248 termination ID corresponding to one of the participants is T2 with a value of A5555.

It is assumed that the conference is an audio conference and each participant only has one audio media stream. A Media Controller indicates a Media Processor to operate the media stream when the floor request is accepted.

1. The Media Controller sends the information relevant to the floor to the Media Processor.

The floor policies is only one floor; using chair-controlled algorithm; at most one participant can hold the floor in a same time; and the media stream ID relevant to the floor is 1.

MEGACO/2 [123.123.123.4]:55555

Transaction= 10001{

Context = 2000 {ContextAttribute { fcpoli/efc=on, fcpoli/fca =1, fcpoli/mfhn = 1}

}

}

}

2. The Media Processor returns an acknowledgment to the Media Controller.

MEGACO/2 [124.124.124.223]:55555

Reply = 10001 {

Context = 2000

}

3. The Media Controller appointed the participant which the termination with a ID A4444 stands for is floor chair and the stream 1 is controlled by the chair.

MEGACO/2 [123.123.123.4]:55555

Transaction = 10002 {

Context = 2000 {

Modify= A4444 { Media

Stream = 1 {

LocalControl {fcp/afc=on,fcp/cbc=on}

}

}

}

}

4. The Media Processor returns an acknowledgment to the Media Controller.

MEGACO/2 [124.124.124.222]:55555

Reply = 10002 {

Context = 2000{

Modify = A4444

}

}

5. The Media Controller indicates the Media Processor to detect the floor change event of the participant T2. The request ID of the event is 2222.

MEGACO/2 [123.123.123.4]:55555

Transaction 10002 {

Context = 2000 {

Modify = A5555 { Events = 2222 {fsdp/fsd}

}

}

}

6. The Media Processor returns an acknowledgment to the Media Controller.

MEGACO/2 [124.124.124.222]:55555

Reply= 10002 {

Context=2000 {

Modify = A5555

}

}

7. The floor participant sends a floor request to the Media Processor.

8, The Media Processor transfers the floor request to the floor chair.

9. The floor chair sends a floor reply to the Media Processor.

10. The Media Processor reports the floor status change event to the Media Controller to indicate the participant was granted the floor and the stream ID relevant to the floor is 1.

MEGACO/2 [124.124.124.222]:55555

Transaction = 10003 {

Context =2000 {

Notify = A5555 {ObservedEvents=2222 {

fsdp/fsd(fs=granted, sid= {1} }

}

}

}

11. The Media Controller returns a reply of the floor status change event to the Media Processor.

MEGACO/2 [123.123.123.4]:55555

Reply = 10003 {

Context=2000{

Notify = A5555

}

}

12. The Media Controller indicates the Media Processor to modify the stream mode of the termination is receiving a media stream as well as sending a media stream.

MEGACO/2 [123.123.123.4]:55555

Transaction = 10004 {

Context = 2000 {

Mod=A5555 {Media {

Stream = 1 {

LocalControl {Mode = SendRecv}

}

}

}

}

}

13. After modifying the stream mode, the Media Processor returns a reply to the Media Controller.

MEGACO/2 [124.124.124.222]:55555

Reply = 10004 {

Context = 2000{

Modify=A5555

}

}

14. The Media Processor returns a reply to the floor participant.

In conclusion, in the embodiments of the present invention, after acquiring information relevant to a floor, the Media Controller sends the information relevant to a floor to the Media Processor via an extended protocol package, so the Media Processor can process conference floor control according to the received information relevant to a floor.

Further, when appointing the floor chair to the Media Processor, the Media Controller adds a property into the floor control package that is sent to the Media Processor, to indicate the f1oor'(s) controlled by the chair, so it make the Media Processor can acquire which floor(s) is controlled by the chair. It is also possible to appoint the media stream(s) controlled by the chair.

Furthermore, the Media Controller adds an event property into the floor control package that is sent to the Media Processor, to indicate the Media Processor whether need to report the floor status change information. If the Media Controller indicates the Media Processor needing to report the floor status change information, the Media Processor add a event property into the floor control package that is sent to the Media Controller to carry current information of the floor when the floor status changes, so it make the Media Controller can acquire the status change information of the floor participant. Furthermore, the embodiments of the present invention define a media stream operation process when a floor request is accepted. The Media Processor can directly operate the media stream of a participant of the floor or communicate with the Media Controller, and operate the media stream of the participant of the floor according to the media stream control indication sending by the Media Controller.

Although the invention has been described with reference to the embodiments, those ordinarily skilled in the art shall appreciate that numerous modifications and variations are possible to the invention without departing from the spirit of the invention, and the scope of the invention shall be defined as the appended claims.

## Claims

1. A method for exchanging floor information in a decomposed architecture, wherein the method comprises:
acquiring, by a Media Controller, information relevant to a floor; and
sending, by the Media Controller, the information relevant to a floor to a Media Processor.

2. The method according to claim 1, wherein the Media Controller sends the acquired information relevant to a floor to the Media Processor via extended protocol package.

3. The method according to claim 1, wherein after receiving the information relevant to a floor, the Media Processor processes the conference floor control according to the information relevant to a floor.

4. The method according to one of the claims 1 to 3, wherein the information relevant to a floor at least comprises one of the following floor policies: whether the floor control is in use or not, the ID of each floor, the algorithm used by each floor, who is the chair of each floor, the media type relevant to each floor, and the maximum holder number of each floor.

5. The method according to claim 4, wherein the algorithm used by each floor is chair-controlled algorithm, first come first served algorithm, or random algorithm.

6. The method according to claim 4, wherein the media type relevant to each floor comprises:
video, audio, application, data, control, message and text.

7. The method according to one of the claims 1 to 3, wherein the information relevant to a floor comprises: the floor controlled by a floor chair.

8. The method according to one of the claims 1 to 3, wherein the information relevant to a floor comprises: the media stream controlled by a floor chair.

9. The method according to one of the claims 1 to 3, wherein the information relevant to a floor comprises: whether need to report floor status change information or not.

10. The method according to claim 9, wherein if the Media Controller indicates the Media Processor needs to report, the floor status change information, the Media Processor reports the current information of the floor to the Media Controller when the floor status changed.

11. The method according to claim 10, wherein when the floor status changed, the Media Processor directly operates the media stream of a participant of the floor, and reports the floor status change information to the Media Controller.

12. The method according to claim 10, wherein when the floor status changed, the Media Processor reports the floor status change information to the Media Controller; according to the reported floor status change information, the Media Controller indicates the Media Processor to operate the media stream relevant to the floor.

13. The method according to claim 9, wherein if the Media Controller does not indicate the Media Processor to report the floor status change information, the Media Processor directly operates the media stream of the participant of the floor.

14. The method according to claim 9, wherein the floor status comprises: Granted, Revoked, and Released.

15. A system for exchanging floor information in a decomposed architecture, wherein the system comprises:
a Media Controller, configured to acquire and send information relevant to a floor; and
a Media Processor, configured to receive and save the information relevant to a floor sent by the Media Controller.

16. The system according to claim 15, wherein the Media Controller and the Media Processor separately comprises an extending module configured to extend protocol package; and
the Media Controller further comprises a acquisition module configured to acquire the information relevant to a floor.

17. The system according to claim 16, wherein the extending module in the Media Controller is configured to carry the information relevant to a floor acquired by the acquisition module into the extended protocol package, send it to the Media Processor, and analyze a protocol package sent from the Media Processor.

18. The system according to claim 17, wherein the extending module in the Media Processor is configured to carry the current status information of the floor into the protocol package sent to the Media Controller when the Media Controller indicated the Media Processor to report, the status change information of a floor and the status of the floor changed, and analyze the protocol package sent by the Media Controller.

19. The system according to claim 18, wherein the Media Processor further comprises a floor control module configured to process the control of conference floor according to the saved information relevant to a floor.

20. A Media Controller, comprising:
a acquisition module, configured to acquire the information relevant to a floor; and
an extending module, configured to send the information relevant to a floor acquired by the acquisition module via an extend protocol package.

21. The Media Controller according to claim 20, wherein the extending module further comprises a analysis submodule, configured to analyze a received protocol package.

22. A Media Processor, comprising:
an extending module, configured to report the current status information of a floor via an extended protocol package; analyze a received protocol package, and acquire information relevant to a floor from the received protocol package; and
a storage module is configured to save the extending module acquired by the extending module.

23. The Media Processor according to claim 22, wherein the Media Processor further comprises a floor control module configured to process the control of conference floor according to the information relevant to a floor saved by the storage module.
